# EUROPEAN PATENT SPECIFICATION

(11) **EP 3 568 368 B1**
(45) Date of publication and mention of the grant of the patent: **02.03.2022**
(21) Application number: 18700259.7
(22) Date of filing: 09.01.2018
(51) Int. Cl.: B65H 75/42, B65H 67/02, B65H 54/28, B63B 35/03, B65H 49/32, B65H 75/14, B65H 75/22, F16L 1/20

(54) **REEL LAY SYSTEM AND METHOD OF USE**
SPULENLEGESYSTEM SOWIE VERFAHREN ZUR VERWENDUNG
SYSTÈME DE POSE DE BOBINE ET PROCÉDÉ D'UTILISATION

(30) Priority: 16.01.2017 NL 2018178
(43) Date of publication of application: 20.11.2019
(73) Proprietor: Itrec B.V., 3115 HH Schiedam (NL)
(72) Inventor: NOUWENS, Ronny Lambertus Waltherus, 3115 HH Schiedam (NL); VEHMEIJER, Terence Willem August, 3115 HH Schiedam (NL); TIELEMAN, Hubertus Lourens Leendert, 3115 HH Schiedam (NL); ROODENBURG, Joop, 3115 HH Schiedam (NL)
(74) Representative: EP&C
(86) International application number: PCT/NL2018/050014
(87) International publication number: WO 2018/132000

(56) References cited:
- WO-A1-2009/077711
- WO-A1-2011/105894
- WO-A1-2012/091556
- GB-A- 2 046 207
- GB-A- 2 199 632
- GB-A- 2 517 756
- US-A- 4 961 671
- US-A1- 2003 091 395

## Description

The present invention relates to a reel lay system and a method for spooling and unspooling a length of A&R cable from a vertical reel having a horizontal rotation axis.

A first non-claimed aspect of the disclosure relates to a reel drive system, and methods of use of such a reel drive system. A further non-claimed aspect of the disclosure relates to a modular reel.

A reel drive system configured to drive a vertical reel, for spooling and unspooling lines such as rigid and flexible pipeline, umbilicals, risers and other products for offshore applications is commonly known in the art.

GB2199632 discloses a reel pipelaying vessel having multiple reels, wherein six or more operational lines can be simultaneously laid. Level winding is used to spool the lines onto the reels. The reel comprises a drum between two rims, and is mounted on an axle which is provided with axle bearing housings.

GB2046207 discloses a winding apparatus for winding up or unwinding elongated flexible articles. The apparatus comprises two end bearings of a winch, able to receive at least two drums and onto each of which can be wound a length of the article.

WO2011105894 of the same applicant discloses a reel lay vessel with a support frame configured to vertically support a reel for storing pipeline, and a guide configured to guide the pipeline. Furthermore an assembly and winding site is provided for assembling and winding the pipeline on the reel. Reel drive means are provided to rotate the reel.

Such a vertical reel has a horizontal rotation axis and comprises a left-hand flange and a right-hand flange provided at the left-hand side and right-hand side of a hub respectively, the hub being rotatable about a rotation axis. An X-direction is defined perpendicular to the rotation axis, and a Y-direction in the direction of the rotation axis.

The known reel drive systems comprise:
- a base frame comprising a left-hand X-rail and a right-hand X-rail, defining there between a central axis,
- a left-hand and right-hand intermediate frame, movable along the left-hand X-rail and right-hand X-rail respectively,
- a left-hand drive tower supported by the left-hand intermediate frame and a right-hand drive tower supported by the right-hand intermediate frame, allowing both drive towers to be movable in the X-direction, the drive towers being adapted to engage and rotate the vertical reel.

It is an aim of the first aspect of the disclosure to provide a more versatile reel drive system.

This aim is achieved by a reel drive system configured to drive a vertical reel having a horizontal rotation axis, the reel comprising a left-hand flange and a right-hand flange provided at the left-hand side and right-hand side of a hub, respectively, wherein an X- direction is perpendicular to the rotation axis of the reel, and a Y-direction is in the direction of the rotation axis, for spooling and unspooling lines, such as rigid and flexible pipeline, umbilicals, risers and other products for offshore applications, the reel drive system comprising:
- a base frame comprising a left-hand X-rail and a right-hand X-rail, defining there between a central axis,
- a left-hand and right-hand intermediate frame, movable along the left-hand X-rail and right-hand X-rail respectively,
- a left-hand drive tower supported by the left-hand intermediate frame and a right-hand drive tower supported by the right-hand intermediate frame, allowing both drive towers to be movable in the X-direction, the drive towers being adapted to engage and rotate the vertical reel,
   wherein preferably the drive towers comprising a reel hub adapter being adapted to engage the vertical reel, and a drive adapted to rotate the vertical reel, and wherein the base frame further comprises a longitudinal Y-rail assembly, extending perpendicular to and across the left- and right-hand X-rail, wherein at the crossings both intermediate frames with the drive towers engaged with the reel are adapted to switch from the X-rails to the Y-rail assembly,
   such that once the intermediate frames are at the Y-rail assembly, both drive towers are movable in synchrony in the Y-direction so as to allow sideways fleeting movement of the reel, essentially between a position wherein the left-hand flange is at the central axis and a position wherein the right-hand flange is at the central axis.

An advantage of such a reel drive system is that a sideways fleeting movement of the reel during spooling and unspooling is possible, essentially between a position wherein the left-hand flange is at the central axis and a position wherein the right-hand flange is at the central axis.

The base frame can be placed on deck of a vessel or other offshore structure. It is also conceivable that the base frame is reel drive system is used on shore, and the base frame is positioned on shore.

The sideways fleeting movement is advantageous to promote proper unwinding of a pipeline, also referred to as unspooling of the rigid pipeline from the storage reel to the pipeline guide. For proper unwinding, the pipeline departing angle is preferably essentially 90°, wherein the pipeline departing angle is defined by the angle between the unspooling direction of a winding of pipeline from the hub and the horizontal reel axis. For a system comprising a storage reel and a pipeline guide, left and right fleet angles can be defined to determine the spooling and unspooling quality of the storage reel. The left and right fleet angle are defined as the angle between a first line drawn from the guide departure point to the storage reel, perpendicular to the reel axis, and a second line drawn from the guide departure point to the left and right flange, respectively. Advantageously, the left and right fleet angles do not exceed 7,5°, preferably not larger than 5,5°. The larger the fleet angles, the poorer the spooling and unspooling, which may damage the pipeline through crushing and abrasion.

Hence, the effect of the reel drive system of the first aspect of the disclosure is that spooling and unspooling is improved.

The first aspect of the disclosure also relates to a reel lay system comprising in combination:
- the reel drive system,
- a vertical reel having a horizontal rotation axis, the reel comprising a left-hand flange and a right-hand flange provided at the left-hand side and right-hand side of a hub, respectively.

The first aspect of the disclosure also relates to a pipeline installation vessel for laying an offshore pipeline in the sea, comprising:
- the reel drive system,
- at least one vertical reel having a horizontal rotation axis, the reel comprising a left-hand flange and a right-hand flange provided at the left-hand side and right-hand side of a hub, respectively,
- a pipeline launch assembly mounted to the vessel downstream of the reel in a direction of unspooling, which pipeline launch assembly is adapted to launch the unwound pipeline in a firing line into the sea.

In embodiments, the central axis extends parallel to the longitudinal axis of the vessel.

Advantageously is the hub adapted to store multiple layers, each comprising several windings of line, preferably pipeline.

A method according to the first aspect of the disclosure for unspooling a line from a vertical reel having a horizontal rotation axis, wherein use is made of the reel drive system, comprises the steps of:
- positioning the reel with the flanges at either side of the central axis,
- moving the left-hand and right-hand drive tower along the respective X-rail to a position adjacent the reel,
- engaging the drive towers with the reel,
- moving the intermediate frames with the drive towers to the crossings with the Y-rail assembly,
- switching the intermediate frames to the Y-rail assembly,
- unspooling the line while allowing the reel, driven by the drive towers, to perform a sideways fleeting movement between a position wherein the left-hand flange is at the central axis and a position wherein the right-hand flange is at the central axis.

Advantageously, the drive towers are movable in the Y-direction between a position in which the drive towers engage the reel and a transit position wherein the reel is disengaged, preferably wherein the intermediate frames with the drive towers have moved along the Y-rail away from the reel, such that the reel is disengaged. Preferably, cradles are provided, e.g. the base frame is provided with cradles, which cradles are adapted to support the reel in the transit position. Such a transit position is e.g. used when the reel lay system and reel are installed on a vessel, during travelling of said vessel.

An advantageous method for positioning a reel and such a reel drive system in a transit position comprises the steps of:
- moving the drive towers engaged with the reel to crossings with the Y-rail assembly,
- switching the intermediate frames to the Y-rail assembly,
- disengaging the drive towers from the flanges,
- moving the intermediate frames with the drive towers along the Y-rail away from the flanges,
- positioning the flanges onto cradles.

Preferably, the intermediate frames are fixed with respect to the Y-rail assembly in the transit position.

In an alternative configuration, it is also conceivable that the drive towers are movable in the Y-direction between a position in which the drive towers engage the reel and a transit position wherein the reel is disengaged, by providing the drive towers movable relative to their respective intermediate frames.

A method for positioning a reel and such a configuration of the reel drive system in the transit position, comprises the steps of:
- moving the drive towers engaged with the reel to the X-rails,
- fixing the intermediate frame with respect to the X-rails,
- moving the drive towers with respect to the intermediate frames away from the flanges,
- positioning the flanges onto cradles.

In embodiments, the base frame comprises perpendicular to and across the X-rails a first reel longitudinal Y-rail assembly and a distinct second reel longitudinal Y-rail assembly. This allows the use of the reel drive system in combination with two vertical reels, thereby doubling the capacity of the system.

In the art, reel drive systems are also known in combination with three or more vertical reels. It is conceivable that the base frame comprises perpendicular to and across the X-rails also a third reel longitudinal Y-rail assembly and optionally even a fourth reel longitudinal Y-rail assembly. In addition, it is conceivable that the base frame comprises two parallel sets of X-rails.

In embodiments, the base frame further comprises a left-hand guide rail and right-hand guide rail parallel to and adjacent the left-hand X-rail and right-hand X-rail respectively to further guide and support the respective intermediate frames. This is advantageous in view of the total weight of the reel and drive towers to be supported, which adds up to several hundreds of tons. To further ensure a proper support of the intermediate frames in the Y-direction, advantageously the Y-rail assembly comprises a set of parallel Y-rails.

In embodiments, the X-rails are provided with holes and the intermediate frames with pins, allowing the intermediate frames to be movable along the X-rails via a push-pull system. This ensures a proper fixation of the intermediate frame to the X-rail in discrete positions thereof, allowing the drive tower to travel and be provided adjacent multiple distinct reels provided along the X-rails. Advantageously, the X-rails are intermitted to allow the crossing of the Y-rail assembly. As the intermediate frames have a large footprint, this is an easy way of providing a crossing. Alternative types of crossings are also possible but may be more complex.

In embodiments, the Y-rail assembly comprises a rack and the intermediate frames one or more pinions, allowing the intermediate frames to be movable along the Y-rail assembly via a rack-and-pinion system. This allows continuous movement of the intermediate frames along the Y-rail, while still providing a reliable mounting of the intermediate frames to the Y-rail assembly. Advantageously, the one or more pinions are mounted movable, e.g. via a cylinder, to the intermediate frame, allowing movement between a lifted parking position when the intermediate frame is on the X-rail and a lowered operational position in which the one or more pinions engage with the rack of the Y-rail assembly.

In embodiments, each drive tower comprises a frame, a drive and a reel hub adapter. This is commonly known in the art. Advantageously, the height position of the reel hub adapter with respect to the frame is adjustable, e.g. depending on the dimension of the reel. For example, height adjustment is realized via cylinders.

The first aspect of the disclosure also relates to a reel drive system configured to drive a vertical reel having a horizontal rotation axis, the reel comprising a left-hand flange and a right-hand flange provided at the left-hand side and right-hand side of a hub, respectively, wherein an Y-direction is defined parallel to the rotation axis of the reel, the reel drive system comprising:
- a base frame comprising a longitudinal Y-rail assembly extending in the Y-direction,
- a left-hand and right-hand intermediate frame, movable along the Y-rail assembly,
- a left-hand drive tower supported by the left-hand intermediate frame and a right-hand drive tower supported by the right-hand intermediate frame, the drive towers being adapted to engage and rotate the vertical reel,
- such that the drive towers are movable in synchrony in the Y-direction so as to allow sideways fleeting movement of the reel, essentially between a position wherein the left-hand flange is at a central axis and a position wherein the right-hand flange is at the central axis.

Advantageously, the Y-rail assembly comprises a rack and the intermediate frames one or more pinions allowing the intermediate frames to be movable along the Y-rail assembly via a rack-and-pinion system.

The first aspect of the disclosure relates to a reel drive system configured to drive a vertical reel, comprising a base frame, a left-hand and right-hand intermediate frame and a left-hand drive tower supported by the left-hand intermediate frame and a right-hand drive tower supported by the right-hand intermediate frame. The drive towers are adapted to engage and rotate the vertical reel. The base frame comprises X-rails and a longitudinal Y-rail assembly extending perpendicular to and across the X-rails, wherein at the crossings both intermediate frames with the drive towers engaged with the reel are adapted to switch from the X-rails to the Y-rail assembly, such that once the intermediate frames are at the Y-rail assembly, both drive towers are movable in synchrony in the Y-direction so as to allow sideways fleeting movement of the reel.

The present invention relates to a reel lay system comprising a reel drive system, configured to drive a vertical reel, for spooling and unspooling lines such as rigid and flexible pipeline, umbilicals, risers and other products for offshore applications, which is commonly known in the art. Examples of known reel lay systems are described in GB2199632 and US2003/091395.

Such a vertical reel has a horizontal rotation axis and comprises a left-hand flange and a right-hand flange provided at the left-hand side and right-hand side of a hub respectively, the hub being rotatable about a rotation axis. An X-direction is defined perpendicular to the rotation axis, and a Y-direction in the direction of the rotation axis. The hub is adapted to store multiple layers, each comprising several windings of pipeline, preferably rigid pipeline.

It is an aim of the present invention to provide a more versatile reel lay system. This aim is achieved by a reel lay system according to the preamble of claim 1, wherein a length of A&R cable and a length of pipeline are stored on the reel, and wherein the reel drive system is configured to unspool and spool the A&R cable and the pipeline from the reel.

The advantage of such a reel lay system is that no separate A&R winch has to be provided.

A flange of the reel comprises two parallel flange walls between which an A&R hub is provided storing a length of A&R cable, and wherein the reel drive system is configured to unspool and spool the A&R cable from the reel. This provides a very elegant storage location for the A&R cable.

In an embodiment, the reel drive system comprises:
- a base frame comprising a left-hand X-rail and a right-hand X-rail, defining there between a central axis,
- a left-hand and right-hand intermediate frame, movable along the left-hand X-rail and right-hand X-rail respectively,
- a left-hand drive tower supported by the left-hand intermediate frame and a right-hand drive tower supported by the right-hand intermediate frame, allowing both drive towers to be movable in the X-direction, the drive towers being adapted to engage and rotate the vertical reel, such that the X-direction is perpendicular to the rotation axis of the reel.

This reel lay system of the invention is advantageously combined with the reel drive system of the first aspect of the disclosure.

This enables an advantageous method according to claim 4 of the invention for spooling and unspooling a length of A&R cable from a vertical reel having a horizontal rotation axis, the reel comprising a left-hand flange and a right-hand flange provided at the left-hand side and right-hand side of a hub, respectively, the hub being adapted to store multiple layers, each comprising several windings of pipeline, in particular rigid pipeline, wherein the length of A&R cable is stored at a flange of the reel, which flange comprises two parallel flange walls between which an A&R hub is provided.

In embodiments wherein one of the flanges of the reel comprises two parallel flange walls between which an A&R hub is provided to store a length of A&R cable, and wherein use is made of the reel drive system of the first aspect of the disclosure, the method advantageously comprises the steps of:
- positioning the reel with the flanges at either side of the central axis,
- moving the left-hand and right-hand drive tower along the respective X-rail to a position adjacent the reel,
- engaging the reel and the drive towers,
- moving the intermediate frames with the drive towers along the X-rail to the crossings with the Y-rail assembly,
- switching the intermediate frames to the Y-rail assembly,
- moving the intermediate frames with the drive towers along the Y-rail assembly until the A&R flange is at the central axis,
- fixing the intermediate frame with respect to the Y-rail assembly,
- unspooling the A&R cable.

The disclosure also relates to a vertical reel having a horizontal rotation axis, the reel comprising a left-hand flange and a right-hand flange provided at the left-hand side and right-hand side of a hub, respectively, the hub being adapted to store multiple layers, each comprising several windings of pipeline, in particular rigid pipeline; wherein a flange of the reel comprises two parallel flange walls between which an A&R hub is provided, adapted to store a length of A&R cable, and wherein the reel drive system is configured to unspool and spool the A&R cable and the pipeline from the reel.

The invention is further elucidated in relation to the drawings, in which:
Figs. 1a and 1b represent opposed side views of a reel drive system and a vertical reel according to the first aspect of the disclosure in a transit configuration;
Fig.2a represents a top view of a reel drive system engaged with a vertical reel in an operational configuration according to the first aspect of the disclosure;
Fig. 2b is an enlarged view of part of fig. 2a;
Fig. 3a is a top view of a first disassembled part of the base frame of a reel drive system according to the first aspect of the disclosure, in the transport configuration;
Figs. 3b and 3c are side views of the first disassembled part of the base frame of fig. 3a;
Fig. 4a is a top view of a second disassembled part of the base frame of a reel drive system according to the first aspect of the disclosure, in the transport configuration;
Figs. 4b and 4c are side views of the second disassembled part of the base frame of fig. 4a;
Fig. 5a is a top view of a third disassembled part of the base frame of a reel drive system according to the first aspect of the disclosure, in the transport configuration;
Figs. 5b and 5c are side views of the disassembled part of the base frame of fig. 5a;
Fig. 6a is a top view of an intermediate frame of a reel drive system according to the first aspect of the disclosure, in the transport configuration;
Figs. 6b and 6c are side views of the intermediate frame of fig. 6a;
Fig. 7a is a top view of a drive tower of a reel drive system according to the first aspect of the disclosure, in the transport configuration;
Figs. 7b and 7c are side views of the drive tower of fig. 7a;
Figs. 8a-8c show side views of the reel drive system and a vertical reel according to the first aspect of the disclosure in the operational configuration;
Fig. 8d shows a side view of the reel drive system of figs. 8a-8c in the transit configuration;
Fig. 9a shows a side view of the reel;
Fig. 9b shows the reel of fig. 9a in cross-section;
Fig. 10 shows the reel of figs. 9a and 9b in a side view;
Fig. 11 shows a hub of the reel of figs. 9 and 10 in cross-section;
Fig. 12 shows the hub of fig. 11 in cross-section during disassembly
Fig. 13a and 13b show a flange in disassembled transport configuration in side and top view respectively;
Fig. 14a and 14b show an alternative flange in disassembled transport configuration in side and top view respectively;
Fig. 15a and 15b show the in disassembled transport configuration in top and side view respectively.

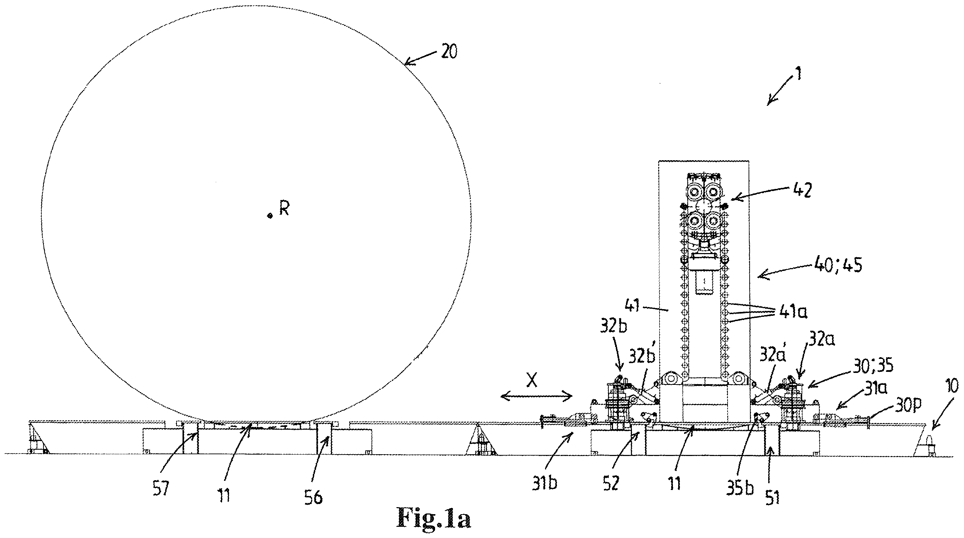

In figs. 1a-8d, an embodiment of a reel drive system 1 according to a first aspect of the disclosure is shown.

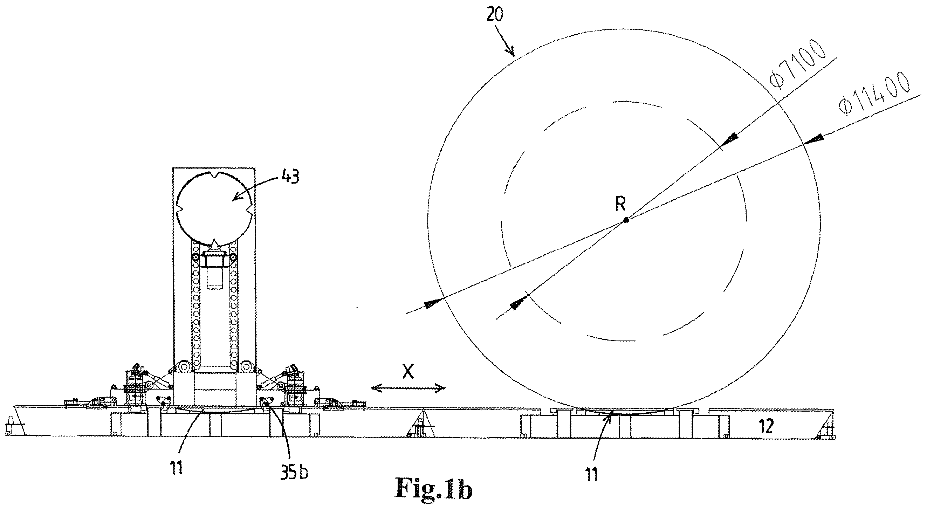

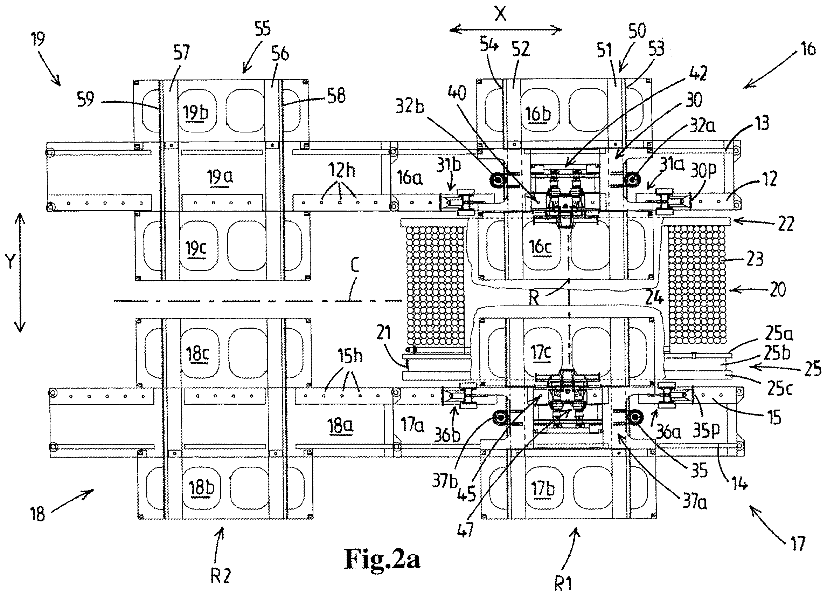

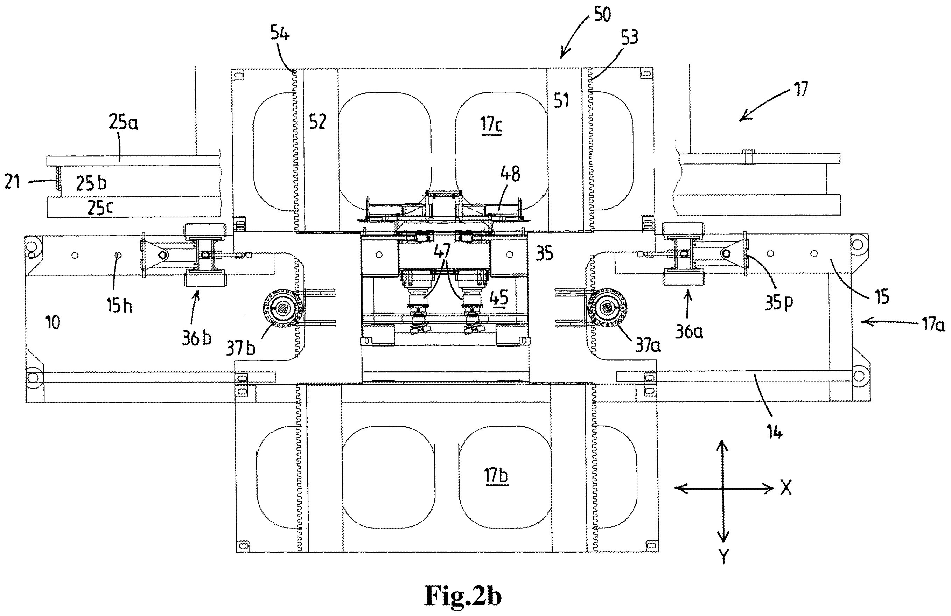

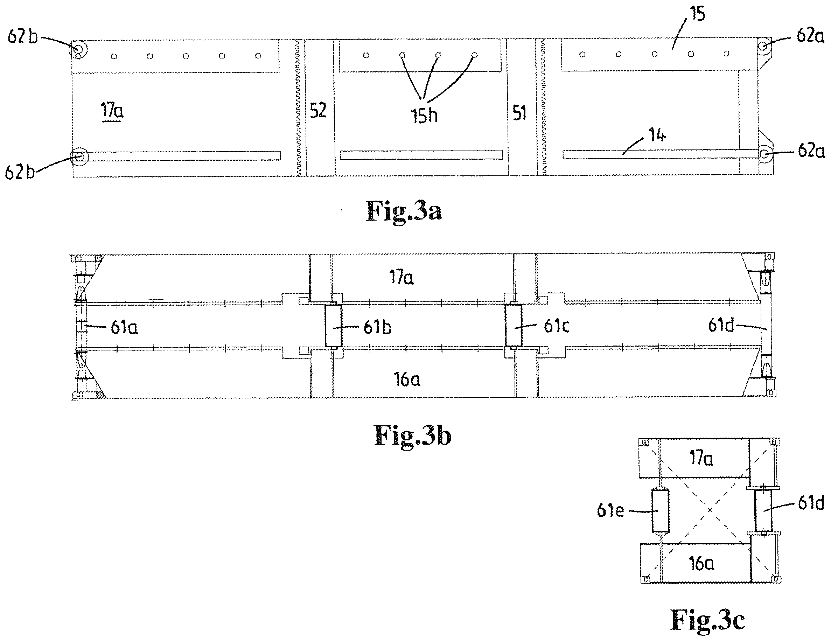

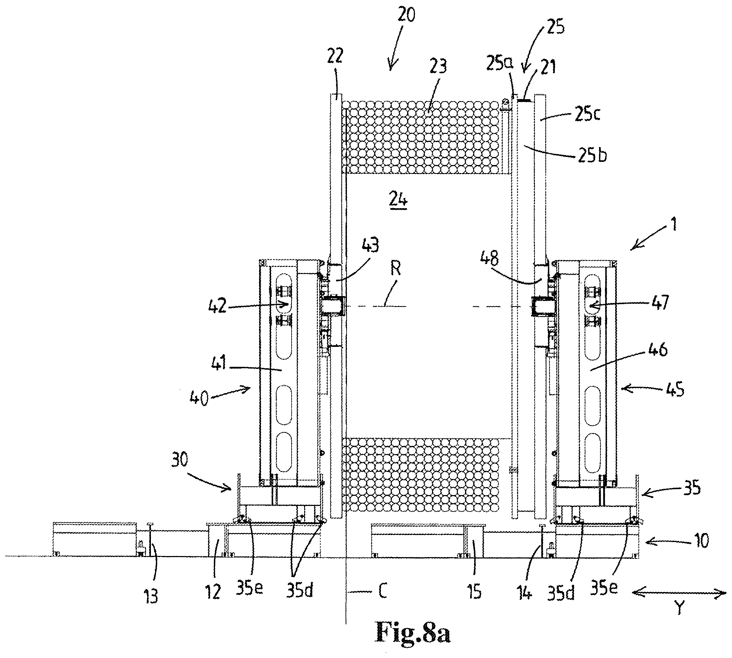

In figs. 1a and 1b a reel drive system 1 according to a first aspect of the disclosure and a vertical reel 20 are shown in a transit configuration, at a mutual distance from each other, in opposed side views. In figs. 2a and 2b the reel drive system 1 is shown in an operational configuration in a top view, and in figs. 8a-8d in a side view. Figs. 3-7 show the same reel drive system, disassembled into a transport configuration. The shown system is a preferred two-reel system, configured to drive two distinct vertical reels.

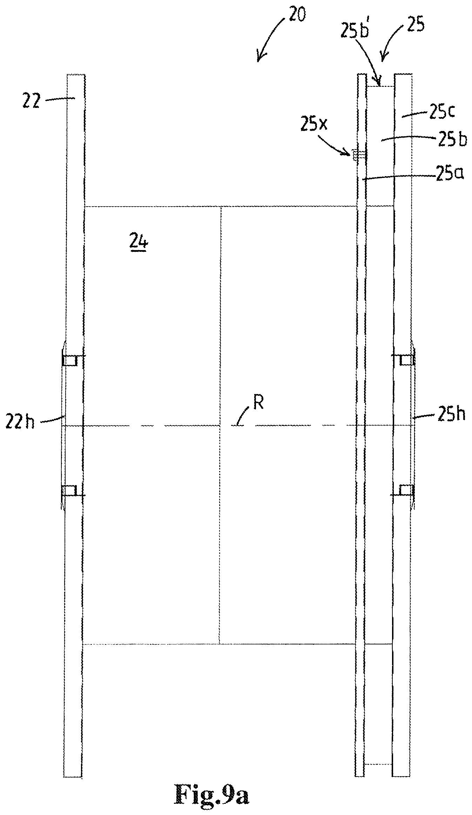

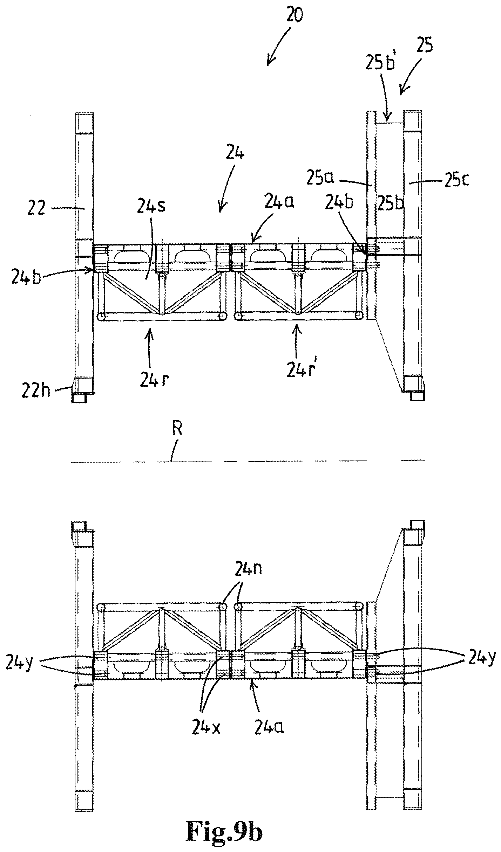

The vertical reel 20, shown in further detail in fig. 9, has a horizontal rotation axis R and comprises a left-hand flange 22 and a right-hand flange 25 provided at the left-hand side and right-hand side of a hub 24, respectively. The shown reel has a flange diameter of 11,4 meter, and a hub diameter of 7,1 meter. This is common for reels of 200-400 mt systems. Other well-known flange diameters which are also suitable to be driven by a reel drive system according to the present disclosure are 4,0 m for 150-400 mt systems, 6,0 m for 500-600 mt systems, 9,2 m for 150 mt systems, 14,0 m for 400-600 mt systems.

The hub is adapted to store multiple layers, each comprising several windings of line 23, such as rigid and flexible pipeline, umbilicals, risers and other products for offshore application, preferably rigid pipeline.

In the shown embodiment, the flange 25 is configured such that it comprises two parallel flange walls 25a, 25c, between which an A&R hub 25b is provided to store a length of A&R cable 21.

The reel drive system 1 is configured to drive a vertical reel 20 having a horizontal rotation axis R. The reel drive system 1 comprises a base frame 10, which is further explained in relation to figures 3, 4 and 5, comprising a left-hand X-rail 12 and a right-hand X-rail 15, defining there between a central axis C. The reel drive system 1 further comprises a left-hand and right-hand intermediate frame 30; 35, movable along the left-hand X-rail and right-hand X-rail respectively, and a left-hand drive tower 40 supported by the left-hand intermediate frame and a right-hand drive tower 45 supported by the right-hand intermediate frame, allowing both drive towers to be movable in an X-direction X, the drive towers being adapted to engage and rotate the vertical reel, such that the X-direction is perpendicular to the rotation axis of the reel.

In the shown embodiment, each drive tower 40; 45 comprises a frame 41; 46, a drive 42; 47 and a reel hub adapter 43, 48. Advantageously, as known in the art, the height position of the reel hub adapter 43 is adjustable with respect to the frame, e.g. depending on the dimension of the reel, e.g. via the available holes 41a.

As in particular visible in the detailed view of fig. 9, in the shown embodiment the reel flanges 22, 25 comprise drive interfaces 22h, 25h respectively to receive the reel hub adapters 43, 48 of the drive towers. In fig. 9, also an end fitting connection point 25x, here provided on reel flange 25, is visible.

The shown preferred base frame further comprises a left-hand guide rail 13 and right-hand guide rail 14 parallel to and adjacent the left-hand X-rail 12 and right-hand X-rail 15 respectively to further guide and support the respective intermediate frames 30; 35.

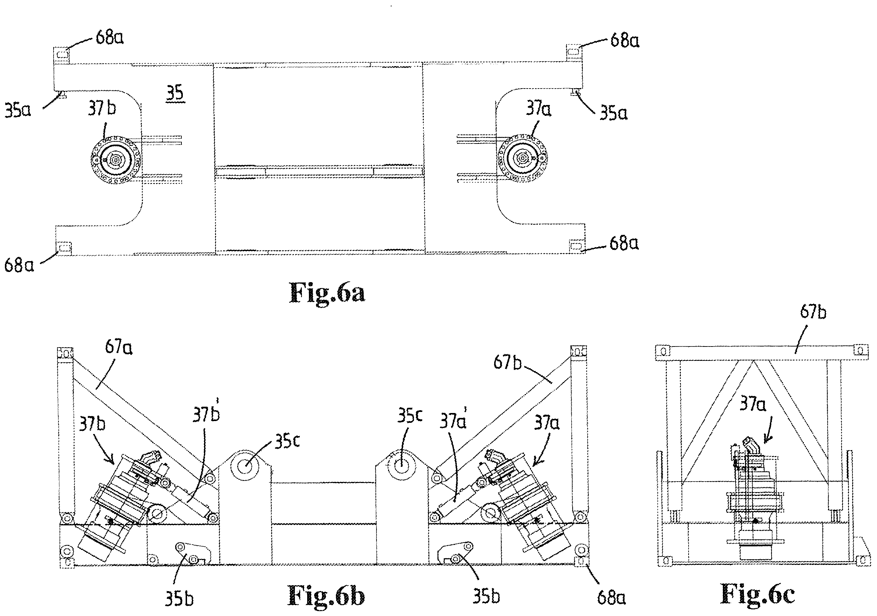

In the shown embodiment, the X-rails are provided with holes 12h; 15h and the intermediate frames 30; 35 with pins 30p; 35p, allowing the intermediate frames to be movable along the X-rails via a push-pull system 31a, 31b; 36a, 36b. In the detailed view of the intermediate frame 35 in fig. 6a a push-pull connector 35a is shown, to connect a push-pull system to the intermediate frame 35. In figs. 8a-8d, gripping members 35d, 35e are visible, adapted to grip the X-rails 12; 15 and the guide rails 13; 14 respectively.

According to the first aspect of the present disclosure, the base frame further comprises a longitudinal Y-rail assembly 50; 55, extending perpendicular to and across the left- and right-hand X-rail, wherein at the crossings both intermediate frames with the drive towers engaged with the reel are adapted to switch from the X-rails to the Y-rail assembly.

The effect is that once the intermediate frames are at the Y-rail assembly, both drive towers are movable in synchrony in an Y-direction Y, i.e. the direction of the rotation axis of the hub R, so as to allow sideways fleeting movement of the reel 20, between a position wherein the left-hand flange 22 is at the central axis C and a position wherein the right-hand flange 25 is at the central axis C. This is visible in figs. 8a-8c.

The Y-rail assembly advantageously also allows the drive towers to be movable in an Y-direction Y, i.e. the direction of the rotation axis of the hub R, between a position in which the drive towers engage the reel and a transit position wherein the reel is disengaged.

In the shown preferred embodiment, the base frame 10 comprises perpendicular to and across the X-rails 12, 15, a first reel longitudinal Y-rail assembly 50 at a location R1 and a distinct second reel longitudinal Y-rail assembly 55 at a location R2. In fig. 2a, it is visible that both Y-rail assemblies comprise a set of parallel Y-rails 51, 52 and 56, 57 respectively.

In the shown embodiment, the X-rails 12, 15 are intermitted to allow the crossing of the Y-rail assembly 50; 55. From fig. 2a follows that the Y-rail assemblies 50 and 55 are also intermitted around the central axis C.

In the shown preferred embodiment, in particular visible in the enlarged top view of fig. 2b, the Y-rail assembly 50; 55 comprises a rack 53, 54; 58, 59, and the intermediate frames 30; 35 one or more pinions 32a, 32b; 37a, 37b, allowing the intermediate frames to be movable along the Y-rail assembly via a rack-and-pinion system. In this embodiment also grippers 35b are provided, visible in figs. 1a and 1b, and in detail in fig. 6b, adapted to grip the Y-rail assembly opposite the side of the rack.

As in particular visible in fig. 1a and 1b, and in the detailed view of figs. 6a-6c, in this embodiment the one or more pinions are movable via a cylinders 32a', 32b', 37a', 37b', between a lifted parking position when the intermediate frame is on the X-rail and a lowered operational position in which the one or more pinions engage with the rack of the Y-rail assembly, as is the position of figs. 1a and 1b.

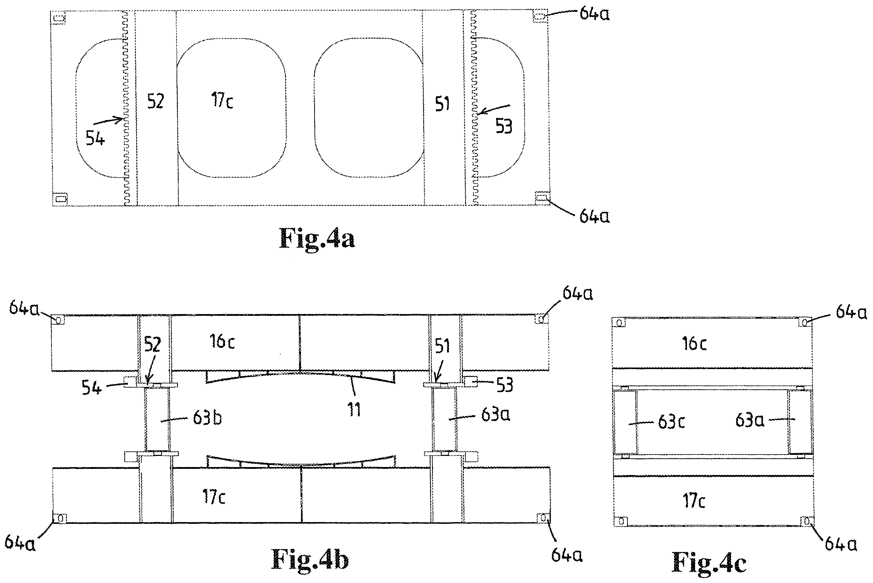

In the shown preferred embodiment, the base frame 10 is provided with cradles 11 adapted to support the reel 20 in the transit position. These cradles are clearly shown in the side view of fig. 4b.

The shown preferred embodiment of the reel drive system 1 is configurable between an assembled operational configuration and a disassembled transport configuration. In figs. 3, 4 and 5, disassembled parts of a preferred base frame of the reel drive system 1 are shown in their transport configuration. In particular, the disassembled parts have the dimension of a shipping container, or are interconnected, possibly via connecter pieces, to have the dimension of a shipping container. Also, the end pieces of a shipping container are provided to allow transport thereof as a shipping container. The shipping container is preferably a 40 feet container, having dimensions of 2,4 (width) x 2,4 (height) x 12 (length) meter.

The base frame 10 of fig. 2a comprises four similar and interconnected parts 16, 17, 18, 19, each having an essentially cross-shape. In fig. 2b, part 17 of the base frame 10 is shown in an enlarged view. All base frame parts have a similar configuration, which is explained in relation to base frame part 17 shown in fig. 2b. The base frame part comprises an interconnected X-rail segment 17a, an external Y-rail segment 17b and an internal Y-rail segment 17c. These three segments together form a base frame part. In fig. 2a, the segments of base frame parts 16, 17, 18 and 19 are analogously numbered.

In fig. 3a, a top view of X-rail segment 17a of base frame part 17 is visible, comprising part of the X-rail 15, guide rail 14 and portions of the parallel Y-rails 51, 52 of the Y-rail assembly 55.

In figs. 3b and 3c, the interconnected X-rail segments 16a and 17a are shown. Additional connector pieces 61a-61e are provided to interconnect the X-rail segments 16a and 17a to have the dimension and end pieces of a 40ft shipping container. In particular, in the shown embodiment the X-rail segments are provided with container fittings 62a, 62b, which can be used to transport the interconnected X-rail segments 16a and 17a, but which are also used to interconnect the X-ail segments in the operational configuration, as visible in fig. 2a.

In fig. 4a, a top view of an internal Y-rail segment 17c is shown in detail, comprising portions of the parallel Y-rails 51, 52 of the Y-rail assembly 55,with racks 53, 54 respectively. At the corners, container fittings 64a are provided, which, similar to the container fittings 62a, 62b, can be used to interconnect the internal Y-rail segment 17c with X-rail segment 17a in the operational configuration, as visible in fig. 2a, but also for transport. In Figs. 4b and 4c, interconnected internal Y-rail segments 17c, 16c are shown, which are interconnected via connector pieces 63a, 63b, 63c, so as to have the dimension of a shipping container.

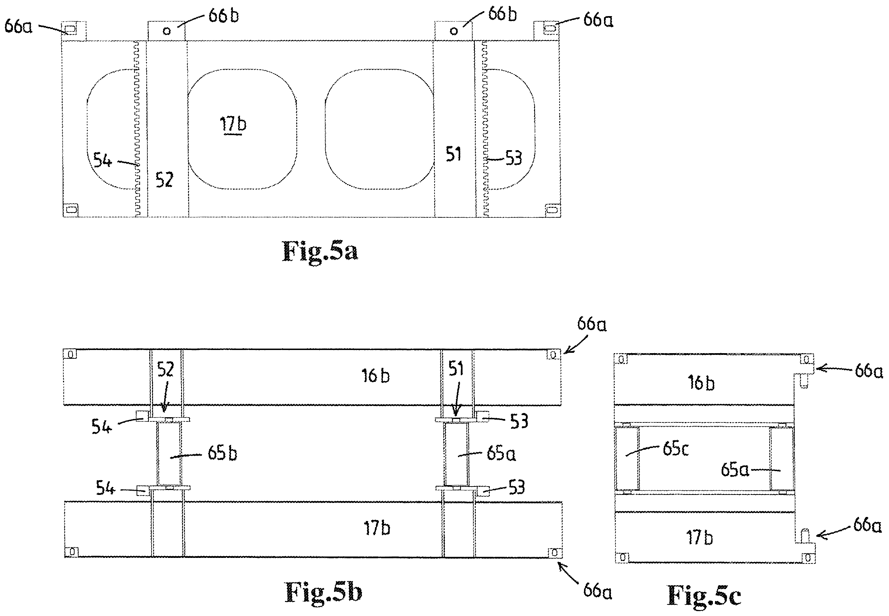

In fig. 5a, a top view of an external Y-rail segment 17b is shown in detail, comprising portions of the parallel Y-rails 51, 52 of the Y-rail assembly 55,with racks 53, 54 respectively. At the corners, container fittings 66a are provided, which, similar to the container fittings 62a, 62b, 64a, can be used to interconnect the external Y-rail segment 17b with X-rail segment 17a in the operational configuration, as visible in fig. 2a, but also for transport. In addition, connectors 66b are provided for interconnection with the X-rail segment 17a. In Figs. 5b and 5c, interconnected external Y-rail segments 17b, 16b are shown, which are interconnected via connector pieces 65a, 65b, 65c, so as to have the dimension of a shipping container.

In fig. 6a, a top view of intermediate frame 35 is shown in detail, comprising pinions 37a, 37b, to engage with racks 53, 54 of the Y-rail assembly 50. At the corners, container fittings 68a are provided, which, similar to the container fittings 62a, 62b, 64a, 66a, can be used for transport purposes. In addition, as visible in figs. 6b and 6c, container pieces 67a, 67b are provided and connected to the intermediate frame 35 so as to provide the dimension of a shipping container. In fig. 6b, eyelets 35c are visible for interconnection of the intermediate frame 35 with a drive tower.

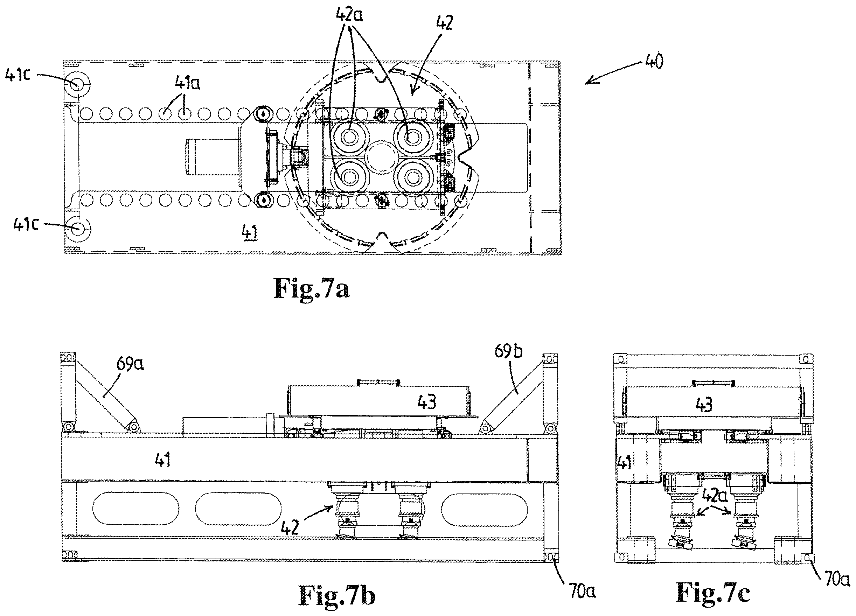

In fig. 7a, a top view of drive tower 40 is shown in detail, comprising a frame 41, a drive 42, here comprising 4 motors 42a, and a reel hub adapter 43. In fig. 7a holes 41a are visible, to adjust the height position of the reel hub adapter 43 with respect to the frame 41, e.g. depending on the dimension of the reel. At the corners, container fittings 70a are provided, which, similar to the container fittings 62a, 62b, 64a, 66a, can be used for transport purposes. In addition, as visible in figs. 7b and 7c, container pieces 69a, 69b are provided and connected to the drive tower 40 so as to provide the dimension of a shipping container. In fig. 7a, eyelets 41c are visible for interconnection to the eyelets 35c of the intermediate frame 35.

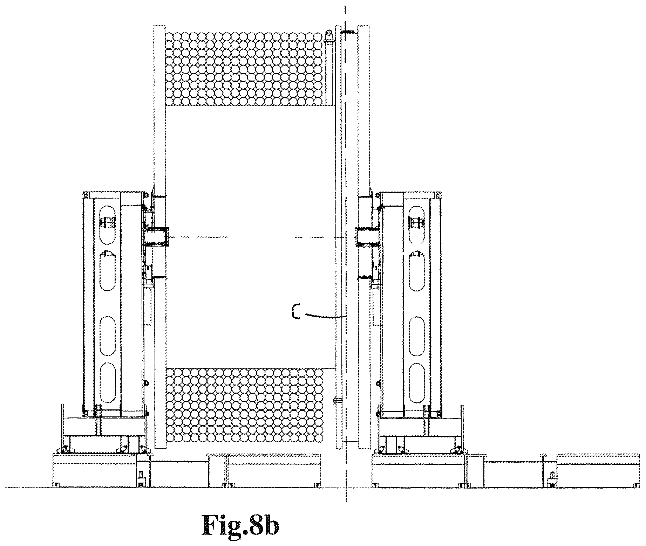

Figs. 8a-8b show side views of the reel drive system and a vertical reel according to the first aspect of the disclosure in the operational configuration, in particular during fleeting of the reel. The intermediate frames 30, 35 have switched to the Y-rail assembly and are disconnected from the X-rails 12, 15 and guide rails 13, 14, which also follows from the grippers 35d, 35e having moved upwards. The drive towers 40, 45 engage reel 20 via reel hub adapters 43, 48, and are movable in synchrony in an Y-direction Y, i.e. the direction of the rotation axis of the hub R. In fig. 8a, the reel 20 has fleeted sideways to a position wherein the left-hand flange 22 is adjacent the central axis C, in in fig. 8b to a position wherein the right-hand flange 25 is at the central axis C. In particular, in the position of fig. 8b the A&R cable 21 can be spooled from the reel 20.

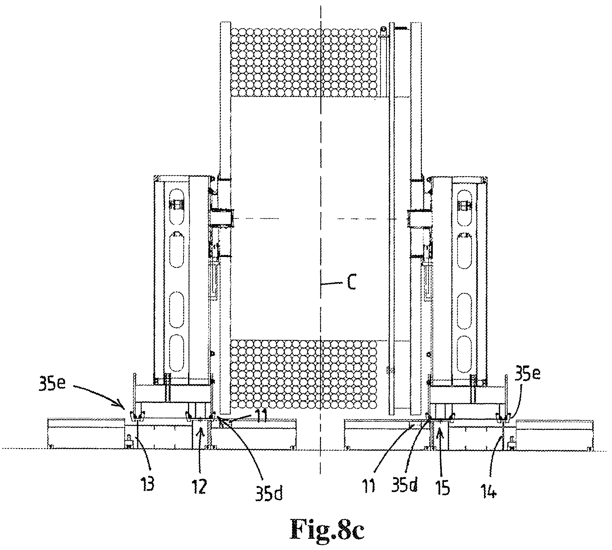

In fig. 8c, the reel drive system 1 and a vertical reel 20 are in the operational configuration, in particular on the X-rails 12, 15. Gripping members 35d, 35e here grip the X-rails 12; 15 and the guide rails 13; 14 respectively. The intermediate frames 30, 35 have switched to the X-rails and are disconnected from the Y-rail assembly 50. The drive towers 40, 45 still engage reel 20 via reel hub adapters 43, 48. In this position skidding on the X-rails is possible via the push-pull system.

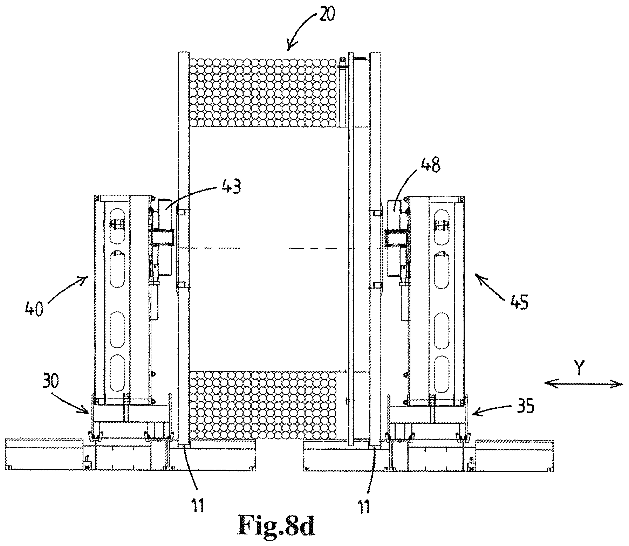

In fig. 8d, the reel drive system 1 and the vertical reel 20 are shown in a transit configuration. The base frame 10 is provided with cradles 11, as visible in side view in fig. 4b, which here support the reel 20 in the transit position. In this transit position, the drive towers 40, 45 are disengaged from the reel 20. To this end, the drive towers have moved in the Y-direction Y. In a not-shown method, the drive towers have moved in the Y-direction via the Y-rail assembly 50. However, in the shown configuration, the intermediate frames 30, 35 of the reel drive system 1 are mounted on the X-rails 12, 15, and engage the X-rails and guide rails similar to the configuration shown in fig. 8c. In this embodiment, the reel drive towers 40, 45 are movable with respect to the respective intermediate frames 30, 35 in the Y-direction, to bring them in the disengaged transit position.

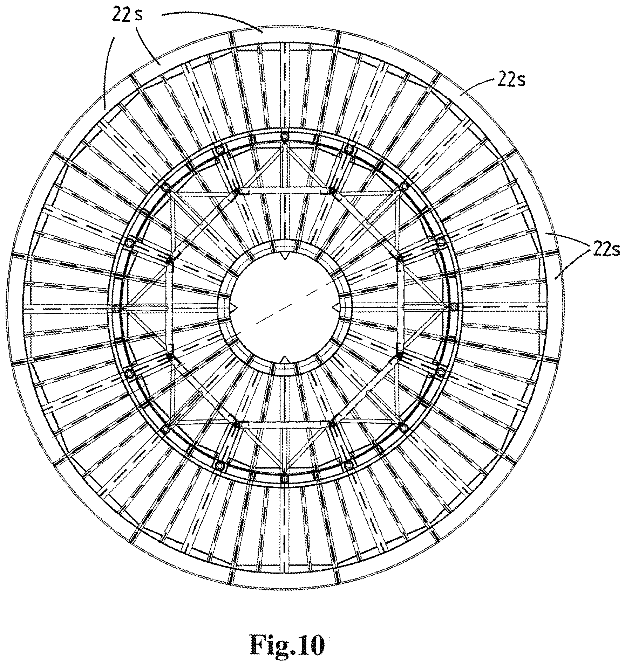

In figs. 9a-15b, the reel 20 is shown in further detail. The shown reel 20 is a modular reel. It further comprises an A&R hub.

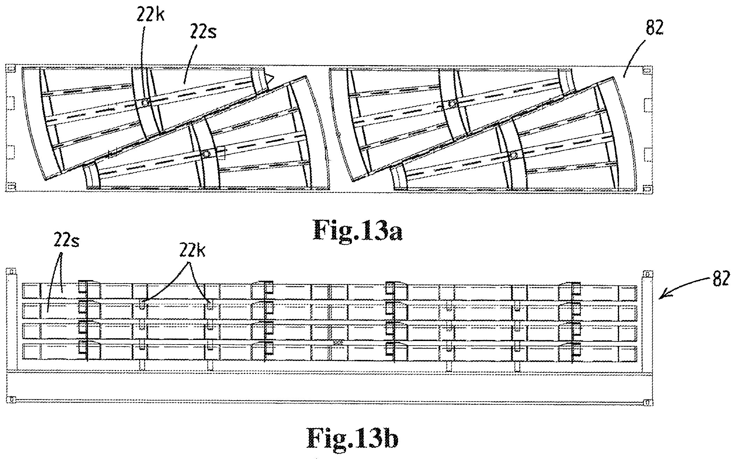

The modular reel 20 is configured to store a length of line, e.g. cable, rigid or flexible pipeline, umbilicals or the like, e.g. a reel having a capacity of 400-800 mt. The modular reel 20 is adapted to be engaged and driven by a reel drive system, e.g. a reel drive system 1 according to the first aspect of the disclosure. Without the stored line, the modular reel 20 is configurable between an assembled operational configuration, as shown in figs. 1-10, and a disassembled transport configuration, as shown in figs. 13a-15b.

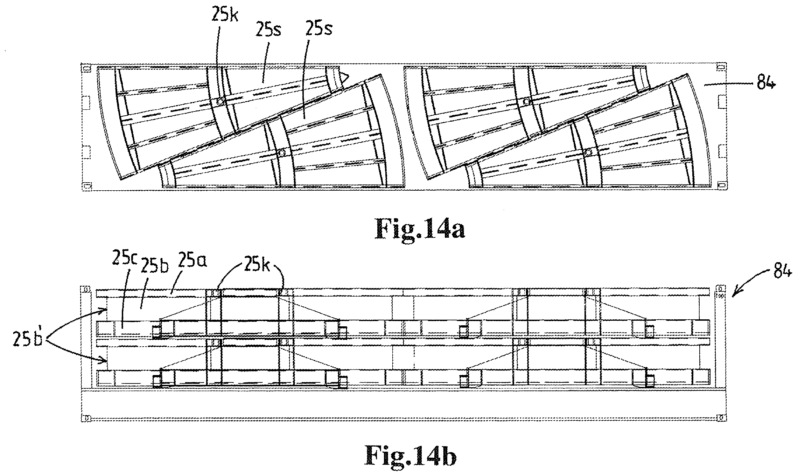

In the operational configuration shown in figs. 9a and 9b, the reel comprises two circular flanges 22; 25, provided at both side faces 24b of a cylindrical hub 24. In the cross section of fig. 9b it is visible that the flanges 22; 25 are connected to the hub 24 via flange connectors 24y, embodied as holes which form a connection with pins 22k, 25k in the flanges, visible in figs. 13 and 14. The hub has a hub surface 24a, adapted to receive the line thereon. The flange 25 of the shown embodiment is an A&R flange comprising in the operational configuration two parallel flange walls 25a, 25c between which an A&R hub 25b is provided with an A&R hub surface 25b' onto which a length of A&R cable can be stored.

Each of the flanges 22; 25 is composed of multiple flange segments 22s; 25s, allowing the assembly of a flange, e.g. by interconnection of the multiple flange segments, from the disassembled transport configuration to the assembled operational configuration. In the shown embodiment, the flange segments are circle sectors. Here, a flange comprises 16 circle sector flange segments. Alternative amounts of circle segments, e.g. 4, 6, 8 or 24 segments are also conceivable. Furthermore, it is also conceivable that the flange segments are not embodied as circle segments but having a different shape. Here, also A&R flange 25 comprises flange segments embodied as circle sectors, wherein each flange segment comprises sectors of the parallel flange walls and of the A&R hub.

Preferably, a flange segment 22s; 25s has a dimension not exceeding that of a 40ft ISO shipping container, so as to be transportable in a 40ft ISO shipping container. Preferably multiple flange segments are transportable in a single 40ft ISO shipping container. In figs. 13a and 13b the storage of all 16 flange segments 22s in 40ft ISO shipping container 82 is visible. In figs. 14a and 14b it is visible that 40ft ISO shipping container 84 is able to store 8 flange segments 25s, comprising the A&R hub 25b, with an A&R hub surface 25b' adapted to store a length of A&R cable. Hence, 2 40ft ISO shipping containers 84 are required to transport the A&R flange 25, and only a single 40ft ISO shipping containers 82 to transport the flange 22.

The hub 24 of the shown embodiment of modular reel 20 has a width exceeding that of a shipping container. The shown reel has a total width of almost 6 metres and a hub width of 4,5 metres. The diameter of the hub exceeds 7 meters. The width of a 40ft ISO shipping container, also referred to as an intermodal container, is 2,4 meters. According to the disclosure the hub comprises in the operational configuration a hub ring, here two parallel hub rings 24r; 24r'. In the operational configuration the hub rings 24r, 24r' are interconnected, here via hub ring connectors 24x. In the cross section of fig. 9b it is visible that the flanges 22; 25 are connected to the hub 24 via flange connectors 24y, embodied as holes which form a connection with pins. In the shown embodiment the hub ring connectors 24x and flange connectors 24y are embodied in a similar way, allowing the assembly of flange 22 - hub ring 24r - hub ring 24r' - flange 25 as shown in fig. 9b, but also with the same convenience the assembly of flange 22 - hub ring 24r' - hub ring 24r - flange 25, or possibly of a smaller reel comprising flange 22 - hub ring 24r - flange 25.

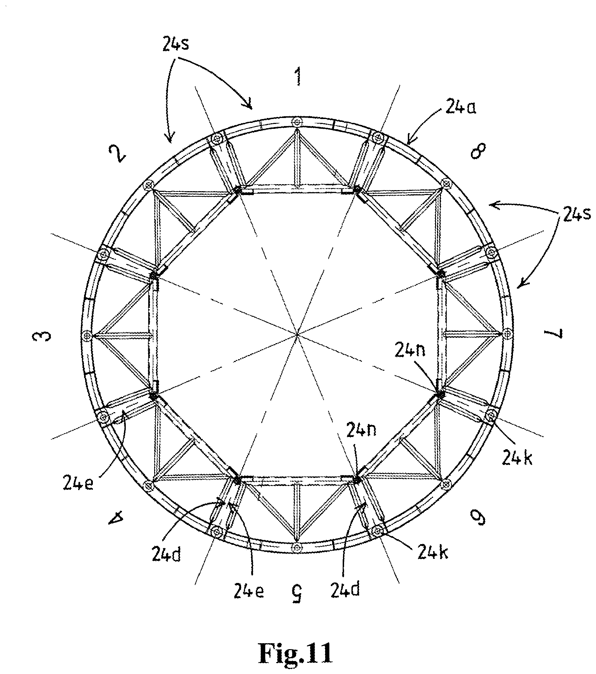

According to the disclosure, a hub ring 24r, 24r' is comprises multiple interconnected ring sections 24s. In the shown embodiment, as visible in fig. 11, the hub ring comprises 8 ring sections. In alternative configurations the hub ring comprises for example 4, 6 or 16 ring sections.

Each ring section 24s comprises part of the hub surface 24a and part of a side face 24b of the hub, and two end faces 24d; 24e. In case of two interconnected hub rings, the ring section comprises part of a side face 24b of the hub, and opposite thereof a side face which in the operation configuration is adjacent a side face of another ring section of the other hub ring. In the operational position as shown in figs. 9-11, the end faces 25d, 24e of all ring sections are positioned opposite each other to form a hub ring.

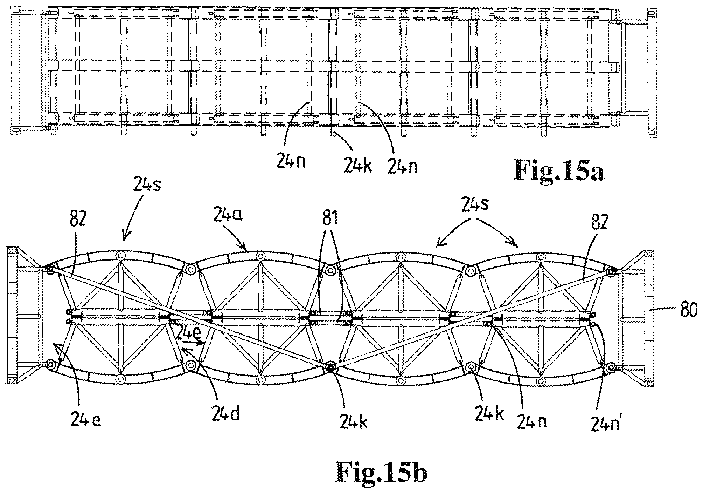

Each of the end faces of a ring section is provided with at least one ring connector 24k', 24n', allowing the assembly of the hub 24 by interconnection of the ring connectors of the multiple ring sections in circumferential direction from the disassembled transport configuration, as shown in fig. 15, to the assembled operational configuration, as shown in figs 9a -11. The ring connectors are for example embodied holes 24k', 24n' in the ring sections, adapted to receive pins 24k, 24n in the assembled operational configuration of fig. 11.

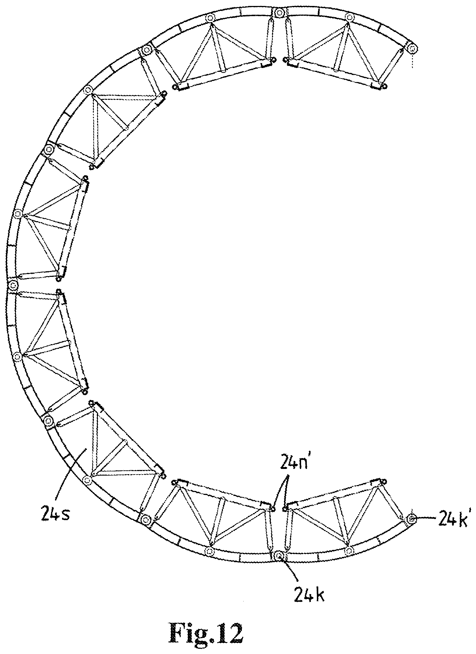

As is preferred, each ring section 24s comprises multiple ring connectors, here holes 24k' and 24n', at each end face. In fig. 12, it is visible that the pins 24n are disconnected to disassemble the hub 24, while maintaining the connection of the pins 24k to the holes 24k'. In the shown transport configuration of figs. 15a, 15b, four ring sections 24s remained interconnected as elongated strings.

According to the disclosure, at least part of the ring connectors 24k, 24n are also adapted to be connected to a ISO shipping container end piece 80. In the disassembled transport configuration, as shown in figs. 15a, 15b, multiple ring sections, here all 8 of them are adapted to be interconnected to each other and to ISO shipping container end pieces so as to form a rigid ring transport assembly as shown in figs. 15a, 15b. The rigid ring transport assembly has a dimension corresponding to that of a ISO shipping container, so as to be transportable and handled as a ISO shipping container.

In the embodiment of figs. 15a, 15b, in the disassembled transport configuration the multiple ring sections 24s are divided into two elongated strings of interconnected ring sections, the strings being connected to each other and to two 40ft ISO shipping container end pieces 80. Here, all 8 ring sections of a hub ring are transportable in a single 40ft ISO shipping container. As the shown reel comprises two hub rings, two 40ft ISO shipping containers are required to transport the hub.

Here also transport pieces 81, 82 are provided to, in the disassembled transport configuration, interconnect ring sections to each other, and possibly also to the ISO shipping container end pieces 80. In particular, transport pieces 81 are used to interconnect the ring sections via the holes 24n', by providing the pins 24n through the holes 24n' and the transport pieces 81. Transport pieces 82 here interconnect the ISO shipping container end pieces 80 with the pins 24k interconnecting the ring sections, in particular the pins 24k of adjacent strings of ring sections and thereby interconnecting the strings of ring sections.

In all, the shown reel having a width of almost 6 meters, a hub diameter of over 7 meters and a reel diameter of 11,4 meters is transportable in 5 40ft ISO shipping containers: 1 for a 'normal' flange, 2 for the A&R flange and 2 for the hub.

## Claims

1. Reel lay system comprising in combination:
- a vertical reel (20) having a horizontal rotation axis (R), the reel comprising a left-hand flange (22) and a right-hand flange (25) provided at the left-hand side and right-hand side of a hub (24), respectively, the hub being adapted to store multiple layers, each comprising several windings of pipeline (23), in particular rigid pipeline;
- a reel drive system (1);
**characterized in that** a length of A&R cable (21) and a length of pipeline are stored on the reel, and wherein the reel drive system is configured to unspool and spool the A&R cable and the pipeline from the reel, wherein the length of A&R cable is stored at a flange (25) of the reel, which flange comprises two parallel flange walls (25a, 25c) between which an A&R hub (25b) is provided.

2. Reel lay system of claim 1, wherein the reel drive system comprises:
- a base frame (10) comprising a left-hand X-rail (12) and a right-hand X-rail (15), defining there between a central axis (C),
- a left-hand and right-hand intermediate frame (30; 35), movable along the left-hand X-rail and right-hand X-rail respectively,
- a left-hand drive tower (40) supported by the left-hand intermediate frame and a right-hand drive tower (45) supported by the right-hand intermediate frame, allowing both drive towers to be movable in the X-direction (X), the drive towers being adapted to engage and rotate the vertical reel, such that the X-direction is perpendicular to the rotation axis of the reel.

3. Reel lay system according to claim 2, wherein
the base frame further comprises a longitudinal Y-rail assembly (50; 55), extending perpendicular to and across the left- and right-hand X-rail, wherein at the crossings both intermediate frames with the drive towers engaged with the reel are adapted to switch from the X-rails to the Y-rail assembly, such that once the intermediate frames are at the Y-rail assembly, both drive towers are movable in synchrony in a Y-direction (Y), in the direction of the rotation axis (R), so as to allow sideways fleeting movement of the reel (20), essentially between a position wherein the left-hand flange (22) is at the central axis (C) and a position wherein the right-hand flange (25) is at the central axis (C).

4. Method for spooling and unspooling a length of A&R cable (21) from a vertical reel (20) having a horizontal rotation axis (R), the reel comprising a left-hand flange (22) and a right-hand flange (25) provided at the left-hand side and right-hand side of a hub (24), respectively, the hub (24) being adapted to store multiple layers, each comprising several windings of pipeline (23), in particular rigid pipeline, wherein the length of A&R cable (21) is stored at a flange (25) of the reel, which flange comprises two parallel flange walls (25a, 25c) between which an A&R hub (25b) is provided.

## Patentansprüche

1. Trommelverlegesystem, umfassend in Kombination:
- eine vertikale Trommel (20) mit einer horizontalen Drehachse (R), wobei die Trommel einen linken Flansch (22) und einen rechten Flansch (25) umfasst, die an der linken bzw. rechten Seite einer Nabe (24) vorgesehen sind, wobei die Nabe ausgestaltet ist, um mehrere Lagen zu lagern, die jeweils mehrere Windungen einer Rohrleitung (23), insbesondere einer starren Rohrleitung, umfassen;
- ein Trommelantriebssystem (1);
**dadurch gekennzeichnet, dass** eine Länge eines A&R-Kabels (21) und eine Länge einer Rohrleitung auf der Trommel gelagert sind, und wobei das Trommelantriebssystem ausgestaltet ist, um das A&R-Kabel und die Rohrleitung von der Trommel abzuwickeln und aufzuwickeln, wobei die Länge des A&R-Kabels an einem Flansch (25) der Trommel gelagert ist, wobei der Flansch zwei parallele Flanschwände (25a, 25c) umfasst, zwischen denen eine A&R-Nabe (25b) vorgesehen ist.

2. Trommelverlegesystem nach Anspruch 1, wobei das Trommelantriebssystem umfasst:
- einen Basisrahmen (10) umfassend eine linke X-Schiene (12) und eine rechte X-Schiene (15), die dazwischen eine Mittelachse (C) definieren,
- einen linken und rechten Zwischenrahmen (30; 35), die entlang der linken X-Schiene bzw. der rechten X-Schiene beweglich sind,
- einen linken Antriebsturm (40), der von dem linken Zwischenrahmen gehalten wird, und einen rechten Antriebsturm (45), der von dem rechten Zwischenrahmen gehalten wird, was beiden Antriebstürmen ermöglicht, in der X-Richtung (X) beweglich zu sein, wobei die Antriebstürme ausgestaltet sind, um in die vertikale Trommel einzugreifen und diese zu drehen, so dass die X-Richtung senkrecht zu der Drehachse der Trommel ist.

3. Trommelverlegesystem nach Anspruch 2, wobei
der Basisrahmen ferner eine in Längsrichtung verlaufende Y-Schienenanordnung (50; 55) umfasst, die sich senkrecht zu und über die linke und rechte X-Schiene erstreckt, wobei an den Kreuzungen beide Zwischenrahmen mit den Antriebstürmen, die mit der Trommel in Eingriff stehen, ausgestaltet sind, um von den X-Schienen auf die Y-Schienenanordnung zu wechseln, so dass, sobald die Zwischenrahmen an der Y-Schienenanordnung sind, beide Antriebstürme synchron in einer Y-Richtung (Y) in der Richtung der Drehachse (R) beweglich sind, um eine seitlich fliehende Bewegung der Trommel (20) zu ermöglichen, im Wesentlichen zwischen einer Position, in der der linke Flansch (22) an der Mittelachse (C) ist, und einer Position, in der der rechte Flansch (25) an der Mittelachse (C) ist.

4. Verfahren zum Auf- und Abwickeln einer Länge eines A&R-Kabels (21) von einer vertikalen Trommel (20), die eine horizontale Drehachse (R) aufweist, wobei die Trommel einen linken Flansch (22) und einen rechten Flansch (25) umfasst, die an der linken Seite bzw. der rechten Seite einer Nabe (24) vorgesehen sind, wobei die Nabe (24) ausgestaltet ist, um mehrere Lagen zu speichern, die jeweils mehrere Windungen einer Rohrleitung (23), insbesondere einer starren Rohrleitung, umfassen, wobei die Länge des A&R-Kabels (21) an einem Flansch (25) der Trommel gelagert ist, wobei der Flansch zwei parallele Flanschwände (25a, 25c) umfasst, zwischen denen eine A&R-Nabe (25b) vorgesehen ist.

## Revendications

1. Système de pose de bobine comprenant, en combinaison :
- une bobine verticale (20) ayant un axe de rotation horizontal (R), la bobine comprenant une embase de gauche (22) et une embase de droite (25) prévues au niveau d'un côté gauche et d'un côté droit d'un moyeu (24), respectivement, le moyeu étant adapté pour stocker plusieurs couches, comprenant chacune plusieurs enroulements d'une conduite (23), en particulier d'une conduite rigide ;
- un système d'entraînement de bobine (1) ;
**caractérisé en ce qu'**une longueur d'un câble A&R (21) et une longueur de conduite sont stockées sur la bobine, et dans lequel le système d'entraînement de bobine est configuré pour dérouler et enrouler le câble A&R et la conduite de la bobine, dans lequel la longueur du câble A&R est stockée au niveau de l'embase (25) de la bobine, ladite embase comprenant deux parois d'embase parallèles (25a, 25c) entre lesquelles un moyeu A&R (25b) est prévu.

2. Système de pose de bobine selon la revendication 1, dans lequel le système d'entraînement de bobine comprend :
- un châssis de base (10) comprenant un rail X de gauche (12) et un rail X de droite (15), qui définissent entre eux un axe central (C),
- des châssis intermédiaires de gauche et de droite (30 ; 35), mobiles le long du rail X de gauche et du ail X de droite, respectivement,
- une tour d'entraînement de gauche (40) supportée par le châssis intermédiaire de gauche et une tour d'entraînement de droite (45) supportée par le châssis intermédiaire de droite, permettant aux deux tours d'entraînement d'être mobiles dans la direction X (X), les tours d'entraînement étant adaptées pour engager et faire tourner la bobine verticale, de sorte que la direction X soit perpendiculaire à l'axe de rotation de la bobine.

3. Système de pose de bobine selon la revendication 2, dans lequel
le châssis de base comprend en outre un ensemble de rails Y longitudinaux (50 ; 55), s'étendant perpendiculairement à et au sein des rails X de gauche et de droite, dans lequel, aux croisements, les deux châssis intermédiaires avec les tours d'entraînement engagées avec la bobine sont adaptés pour passer des rails X à l'ensemble de rails Y, de sorte que, une foi que les châssis intermédiaires se trouvent au niveau de l'ensemble de rails Y, les deux tours d'entraînement soient mobiles de façon synchronisée dans une direction Y (Y), dans la direction de l'axe de rotation (R), de façon à permettre un mouvement flottant latéral de la bobine (20), essentiellement entre une position dans laquelle l'embase de gauche (22) se trouve au niveau de l'axe central (C) et une position dans laquelle l'embase de droite (25) se trouve au niveau de l'axe central (C).

4. Procédé d'enroulement et de déroulement d'une longueur de câble A&R (21) depuis une bobine verticale (20) ayant un axe de rotation horizontal (R), la bobine comprenant une embase de gauche (22) et une embase de droite (25) prévues au niveau du côté gauche et du côté droit d'un moyeu (24), respectivement, le moyeu (24) étant adapté pour stocker plusieurs couches, comprenant chacune plusieurs enroulements d'une conduite (23), en particulier d'une conduite rigide, dans lequel la longueur de câble A&R (21) est stockée au niveau d'une embase (25) de la bobine, ladite embase comprenant deux parois d'embase parallèles (25a, 25c) entre lesquelles un moyeu A&R (25b) est prévu.
